# EUROPEAN PATENT SPECIFICATION

(11) **EP 4 172 269 B1**
(45) Date of publication and mention of the grant of the patent: **28.05.2025**
(21) Application number: 20943529.6
(22) Date of filing: 30.06.2020
(51) Int. Cl.: C08L 69/00, C08L 83/10, C08L 63/00, C08K 13/02

(54) **THERMOPLASTIC COMPOSITIONS WITH IMPROVED HYDROLYTIC AND HEAT STABILITY**
THERMOPLASTISCHE ZUSAMMENSETZUNGEN MIT VERBESSERTER HYDROLYSE- UND WÄRMESTABILITÄT
COMPOSITIONS THERMOPLASTIQUES À STABILITÉ HYDROLYTIQUE ET THERMIQUE AMÉLIORÉE

(43) Date of publication of application: 03.05.2023
(73) Proprietor: SHPP Global Technologies B.V., 4612 PX Bergen op Zoom (NL)
(72) Inventor: SHAN, Wei, Shanghai 201319 (CN); ZHENG, Yun, Shanghai 201319 (CN); LIU, Xing, Shanghai 201319 (CN)
(74) Representative: Balder IP Law, S.L.
(86) International application number: PCT/CN2020/099289
(87) International publication number: WO 2022/000270

(56) References cited:
- EP-A1- 0 353 559
- WO-A1-2008/060723
- CN-A- 103 732 667
- CN-A- 104 039 890
- CN-A- 107 974 065
- CN-A- 108 713 044
- US-A1- 2009 186 966
- US-A1- 2013 190 425
- US-B2- 7 686 997
- US-B2- 7 686 998

## Description

### Field of the Invention

The invention generally concerns hydrolytically stable and heat stable thermoplastic compositions that also can have acceptable mechanical and flame retardant properties. In one aspect, the compositions of the present invention can contain a polycarbonate, a polyphthalyl carbonate (PPC) copolymer, a poly(carbonate-siloxane) copolymer, and an epoxy hydro stabilizer.

### Description of Related Art

Polycarbonates are useful in the manufacture of articles and components for a wide range of applications such as automotive parts to electronic applications and devices. While polycarbonates can provide good mechanical and processability properties, some polycarbonates can sometimes be deficient in other properties. For example, in certain electronic applications such as electrical cells and charger components, it may be beneficial for the polycarbonate composition to also have sufficient hydrolytic stability so as to withstand the rigors of such applications and avoid or reduce hydrolytic degradation of the materials. One possible solution to supplement the deficiencies associated with hydrolytic stability is the use of additives. For example, US 4,393,158 uses epoxy silanes and epoxy siloxanes in an attempt to increase hydrolytic stability. Unfortunately, however, increasing hydrolytic stability can lead to negatively impacting other properties of the composition such as mechanical strength and/or flame retardant properties. CN104039890 discloses thermoplastic composition used in housing of automotive vehicle, includes e.g. polycarbonate, polyester of polyethylene and polybutylene terephthalate, organopolysiloxane-polycarbonate block copolymer having polydiorganosiloxane units.

### Summary of the Invention

A discovery has been made that provides a solution to at least some of the problems that may be associated with polycarbonate containing thermoplastic compositions. In one aspect, it was discovered that a combination of a polycarbonate, a polyphthalyl carbonate (PPC) copolymer, a poly(carbonate-siloxane) copolymer, and an epoxy containing hydro stabilizer can result in a thermoplastic composition having good hydrolytic and heat stability properties while maintaining acceptable flame retardant and/or mechanical properties. In another aspect of the present invention, it was also discovered that PPC used in amounts of, for example, 5 wt. % to 35 wt. %, based on the total in the composition, can impart certain benefits. For example, and in some aspects, going below this range can result in insufficient hydrolytic stability and going above this range can result in deteriorated mechanical properties (e.g., Izod impact strength).

One aspect of the present invention is directed to a thermoplastic composition. The composition can contain a polycarbonate, a polyphthalyl carbonate (PPC) copolymer, a poly(carbonate-siloxane) copolymer, and an epoxy hydrostabilizer. In some aspects, the composition can further contain a mold release agent. In some aspects, a combination of polycarbonates can be used (e.g., the polycarbonate can be a low molecular weight polycarbonate having a weight average molecular (Mw) of 25,000 Da or less, or a high molecular weight polycarbonate having a Mw of higher than 25,000 Da, or a combination of both. In some aspects, the low molecular weight and/or the high molecular weight polycarbonate can be a homopolymer containing repeating carbonate units derived from Bisphenol A. In some aspects, the PPC copolymer can contain carbonate units derived from bisphenol A, resorcinol, or a combination thereof, and ester units derived from a bisphenol, preferably bisphenol A, or resorcinol, and terephthalic acid, isoterephthalic acid, or a combination thereof, wherein a molar ratio of carbonate units to ester units ranges from 1:99 to 99:1. In some aspects, the PPC copolymer can be a poly(bisphenol A carbonate)-co-(bisphenol A-phthalate-ester). In some aspects, the poly(bisphenol A carbonate)-co-(bisphenol A-phthalate-ester) can contain 5 to 35 wt. % of carbonate units and 65 to 95 wt. % of ester units, and wherein the ester units have a molar ratio of isophthalate to terephthalate of 99:1 to 90: 10. The poly(carbonate-siloxane) copolymer can have a siloxane content of 15 wt. % to 25 wt.%, preferably 18 wt.% to 22 wt. %, more preferably about 20 wt.%. based on the total weight of the poly(carbonate-siloxane) copolymer. In some aspects, the thermoplastic composition can have a total siloxane content of 3 wt. % to 8 wt. %. In some aspects, the epoxy hydrostabilizer can contain a styrene-acrylate-epoxy oligomer. In some aspects, the mold release agent can contain pentaerythritol tetrastearate or a polyalphaolefin, or a combination thereof, preferably polyalphaolefin. In some aspects, the thermoplastic composition can contain 30 wt. % to 75 wt. % of the polycarbonate. In some aspects, the thermoplastic composition can contain 5 wt. % to 35 wt. % of the PPC copolymer. In some aspects, the thermoplastic composition can contain 15 wt. % to 30 wt. % of the poly(carbonate-siloxane) copolymer. In some aspects, the thermoplastic composition can contain 0.05 wt. % to 1 wt. % of the epoxy hydrostabilizer. The thermoplastic composition can optionally contain 0.05 wt. % to 1 wt. % of the mold release agent. In some aspects, the thermoplastic composition can contain 30 wt. % to 75 wt. % of the polycarbonate, such as the low molecular weight polycarbonate, or high molecular weight polycarbonate or both, preferably the low molecular weight polycarbonate, 5 wt. % to 35 wt. % of the PPC copolymer, 15 wt. % to 30 wt. % of the poly(carbonate-siloxane) copolymer, 0.05 wt. % to 1 wt. % of the epoxy hydrostabilizer, and optionally 0.05 wt. % to 1 wt. % of the mold release agent. In some aspects, the thermoplastic composition can contain 30 wt. % to 75 wt. % of the low molecular weight polycarbonate and 0 wt. % to 40 wt. % of the high molecular weight polycarbonate, wherein the total wt. % of the low molecular weight and the high molecular weight polycarbonate in the composition is 30 wt. % to 75 wt. %. In some particular aspects, the thermoplastic composition can contain 40 wt. % to 75 wt. % of the low molecular weight polycarbonate. In some particular aspects, the thermoplastic composition can contain 40 wt. % to 75 wt. % of the low molecular weight polycarbonate, 5 wt. % to 35 wt. % of the PPC copolymer, 15 wt. % to 30 wt. % of the poly(carbonate-siloxane) copolymer, 0.05 wt. % to 1 wt. % of the epoxy hydrostabilizer, and 0.05 wt. % to 1 wt. % of the mold release agent. In some aspects, the thermoplastic composition can further contain an antioxidant, an UV-absorber, an anti-drip, or a flame retardant, or any combination thereof. The antioxidant can be a phosphite containing antioxidant. In some aspects, the phosphite containing antioxidant can be tris (2,4-di-tert-butylphenyl) phosphite. The UV-absorber can contain a benzotriazole derivative. In some aspects, the UV-absorber can be 2-(2-hydroxy-3,5-di-cumyl)benzotriazole. The anti-drip can be a poly(tetrafluoroethylene) (PTFE) containing anti-drip. In some aspects, the PTFE can be encapsulated in styrene-acrylonitrile copolymer (SAN), known as TSAN. The flame retardant can be a non-halogen aromatic sulfonate containing flame retardant. In some aspects, the flame retardant can be potassium diphenylsulphon-3-sulphonate (KSS). In some aspects, the thermoplastic composition can contain 0.01 wt. % to 0.5 wt.% of the antioxidant, 0.05 wt. % to 1 wt.% of the UV-absorber, 0.05 wt. % to 1 wt.% of the antidrip, and 0.05 wt. % to 1 wt.% of the flame retardant.

An Izod bar containing the composition can have a weight average molecular weight (Mw) retention of at least 75 % or at least 80 %, or at least 81 %, such as 81 % to 91 %; and/or a notched Izod impact retention of at least 45 %, preferably 45 % to 60 %, after hydrolytic aging of the bar with the composition in a hydrolytic aging chamber for 2000 hours at temperature of about 85 °C and with a relative humidity of about 85 %, compared to a non-exposed reference (e.g., same Izod bar with same composition without hydrolytic aging), tested at the same respective conditions. An Izod bar containing the composition can have a weight average molecular weight (Mw) retention of at least 60 %, or at least 65 %, or at least 68 %, such as 68 % to 75 %, after hydrolytic aging of the bar with the composition in a hydrolytic aging chamber for 3000 hours at temperature of about 85 °C and with a relative humidity of about 85 %, compared to a non-exposed reference (e.g., same Izod bar with same composition without hydrolytic aging) tested at the same conditions. An Izod bar containing the composition can have a weight average molecular weight (Mw) retention of at least 85 %, or at least 91 %, such as 91 % to 97 %, after hydrolytic aging of the bar with the composition in a hydrolytic aging chamber for 1000 hours at temperature of about 85 °C and with a relative humidity of about 85 %, compared to a non-exposed reference (e.g., same Izod bar with same composition without hydrolytic aging) tested at the same conditions. An Izod bar containing the composition can have a weight average molecular weight (Mw) retention of at least 90 %, or at least 95 %, or at least 97 %, such as 97 % to 100 %, after hydrolytic aging of the bar with the composition in a hydrolytic aging chamber for 3000 hours at temperature of about 85 °C and with a relative humidity of about 85 %, compared to a non-exposed reference (e.g., same Izod bar with same composition without hydrolytic aging) tested at the same conditions. In some aspects, the thermoplastic composition, e.g., a molded sample, can have a notched Izod impact strength greater than 500 J/m, preferably greater than 500 to 1200 J/m, at - 30 °C, 3.2 mm and/or greater than 300 J/m, preferably greater than 300 to 1000 J/m, at - 40 °C, 3.2 mm as measured in accordance with ASTM D256. In some aspects, the thermoplastic composition, e.g., a molded sample, can have a heat deflection temperature (HDT) of 121 °C to 131 °C, at 1.82 MPa, 3.2 mm as measured in accordance with ASTM D648. In some aspects, the thermoplastic composition can have a melt flow rate (MFR) of 5 g/10 min to 15 g/10 min, at 300 °C, 1.2 kg as measured in accordance with in accordance with ASTM D1238. In some aspects, the thermoplastic composition, e.g., a molded sample, can have a UL94 rating of V0 at a thickness of 1.5 mm. In some aspects, the thermoplastic composition, e.g., a molded sample, can have a UL94 rating of V0 at a thickness of 1.8 mm. In some aspects, the thermoplastic composition, e.g., a molded sample, can have a tensile strength at break greater than 50 MPa, preferably 52 MPa to 70 MPa at 23 °C, 50 mm/s as measured in accordance with ASTM D638. In some aspects, the thermoplastic composition, e.g., a molded sample, can have a tensile modulus greater than 2000 MPa, preferably 2010 MPa to 2500 MPa at 23 °C, 50 mm/s as measured in accordance with ASTM D638. In some aspects, an Izod bar containing the thermoplastic composition can have a weight average molecular weight (Mw) retention of at least 80 %, after hydrolytic aging of the bar with the composition in a hydrolytic aging chamber for 2000 hours at temperature of about 85 °C and with a relative humidity of about 85 %, compared to a non-exposed reference (e.g., same composition with same Izod bar without hydrolytic aging) tested at the same conditions and the thermoplastic composition, e.g., a molded sample, can have a notched Izod impact strength greater than 500 J/m, at - 30 °C, 3.2 mm as measured in accordance with ASTM D256 and a heat deflection temperature (HDT) at 1.82 MPa, 3.2 mm of 121 °C to 131 °C as measured in accordance with ASTM D648. In some aspects, the thermoplastic composition of the present invention can have one of, a combination of, or all of the properties mentioned herein. In some aspects, the testing conditions of the properties can be respective testing conditions mentioned in the Examples.

The thermoplastic composition of the present invention can be extruded, blow-molded, injection-molded, rotational molded and/or thermoformed compositions. In some aspects, the thermoplastic composition can be comprised in or formed into an article of manufacture. The article of manufacture can be an extruded, a blow-molded, an injection-molded, a rotational molded and/or thermoformed article. In some aspects, the article can be an energy convertor part and/or accessories, invertor part and/or accessories, automobile part and/or accessories, solar apparatus, an electrical junction box, an electrical connector, an electrical vehicle (EV) charger, an outdoor electrical enclosure, a smart meter enclosure, a smart grid power node, PV (photovoltaic) frame and/connector part, or miniature circuit breaker (MCB) applications. In some particular aspects, the article can be a PV frame and/or connector part or an EV charger part. Other embodiments of the invention are discussed throughout this application. Any embodiment discussed with respect to one aspect of the invention applies to other aspects of the invention as well and vice versa. Each embodiment described herein is understood to be embodiments of the invention that are applicable to other aspects of the invention. It is contemplated that any embodiment discussed herein can be implemented with respect to any method or composition of the invention, and vice versa. Furthermore, compositions the invention can be used to achieve methods of the invention.

The following includes definitions of various terms and phrases used throughout this specification.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component. The term "ppm" refer to parts per million by weight, based on the total weight, of material that includes the component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one." The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The thermoplastic composition of the present invention can "comprise," "consist(s) essentially of," or "consist of" particular ingredients, components, compositions, *etc.* disclosed throughout the specification. In one aspect of the present invention, and with reference to the transitional phrase "consist(s) essentially of" or "consisting essentially of," a basic and novel characteristic of the present invention can include hydrolytically stable, heat stable, flame retardant thermoplastic compositions.

All publications mentioned herein are incorporated herein by reference to disclose and describe the methods and/or materials in connection with which the publications are cited.

Other objects, features and advantages of the present invention will become apparent from the following detailed description and examples. It should be understood, however, that the detailed description and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

### Detailed Description of the Invention

A discovery has been made that provides a solution to at least some of the problems that may be associated with some polycarbonate containing thermoplastic compositions. In one aspect, the discovery can include providing a composition containing a polyphthalyl carbonate (PPC) copolymer and epoxy containing hydro stabilizer with polycarbonates. As illustrated in a non-limiting manner in the examples, using a particular amount of PPC copolymer and an epoxy containing hydro stabilizer, with polycarbonates can provide for compositions with sufficient hydrolytic stability and heat stability while maintaining good flame retardant properties and mechanical properties. An advantage of the compositions of the present invention is that there properties can allow the compositions to be used in a broad range of applications, including those in which such compositions may be otherwise subjected to hydrolytic degradation (e.g., high temperature environments and/or electronic applications such as electrical cells and charger components).

These and other non-limiting aspects of the present invention are discussed in further detail in the following sections.

### A. Thermoplastic compositions

In one aspect, the thermoplastic compositions of the present invention can contain i) 30 wt. % to 75 wt. %, or 40 wt. % to 75 wt. % or at least any one of, equal to any one of, or between any two of 30, 35, 40, 45, 50, 55, 60, 65, 70 and 75 wt. % of the polycarbonate, such as the low molecular weight polycarbonate or the high molecular weight polycarbonate or a combination thereof, preferably the low molecular weight polycarbonate, ii) 5 wt. % to 35 wt. %, or 10 wt.% to 30 wt.% or at least any one of, equal to any one of, or between any two of 5, 10, 20, 25, 30 and 35 wt. % of the PPC polymer, iii) 15 wt. % to 30 wt. %, or at least any one of, equal to any one of, or between any two of 15, 20, 25, and 30 wt. % of the poly(carbonate-siloxane) copolymer, iv) 0.05 wt. % to 1 wt. %, or at least any one of, equal to any one of, or between any two of 0.05, 0.1, 0.2, 0.3, 0.4, 0.5, 0.6, 0.7, 0.8, 0.9 and 1 wt. % of the epoxy hydrostabilizer, and v) optionally 0.05 wt. % to 1 wt. % or at least any one of, equal to any one of, or between any two of 0.05, 0.1, 0.2, 0.3, 0.4, 0.5, 0.6, 0.7, 0.8, 0.9 and 1 wt. % of the mold release agent, such as pentaerythritol tetrastearate or a polyalphaolefin, or a combination thereof, preferably a polyalphaolefin.

In some aspects, the thermoplastic composition can further contain one or more additives. The one or more additives can be but are not limited to, scratch-resistance agents, antioxidants, flame retardants, fillers, UV absorbers, photochemical stabilizers, optical brighteners, surfactants, processing aids, or anti-drips, pigments, or any combinations thereof. In some aspects, the one or more additive includes an antioxidant, an UV-absorber, an anti-drip, and a flame retardant. In some aspects, the thermoplastic composition can contain vi) 0.01 wt. % to 0.5 wt. %, or at least any one of, equal to any one of, or between any two of 0.01, 0.05, 0.1, 0.2, 0.3, 0.4, and 0.5 wt. % of the antioxidant, such as phosphite containing antioxidant, e.g. tris (2,4-di-tert-butylphenyl) phosphite, vii) 0.05 wt. % to 1 wt. %, or at least any one of, equal to any one of, or between any two of 0.05, 0.1, 0.2, 0.3, 0.4, 0.5, 0.6, 0.7, 0.8, 0.9 and 1 wt. % of the UV-absorber such as benzotriazole derivative containing UV-absorber e.g. 2-(2-hydroxy-3,5-di-cumyl)benzotriazole, viii) 0.05 wt. % to 1 wt. %, or at least any one of, equal to any one of, or between any two of 0.05, 0.1, 0.2, 0.3, 0.4, 0.5, 0.6, 0.7, 0.8, 0.9 and 1 wt. % of the anti-drip, such as (PTFE) containing anti-drip e.g. TSAN and ix) 0.05 wt. % to 1 wt. %, or at least any one of, equal to any one of, or between any two of 0.05, 0.1, 0.2, 0.3, 0.4, 0.5, 0.6, 0.7, 0.8, 0.9 and 1 wt. % of the flame retardant, such as a non-halogen aromatic sulfonate containing flame retardant e.g. potassium diphenylsulphon-3-sulphonate (KSS).

### 1. Polycarbonate

The polycarbonate can include carbonate units. Suitable carbonate units are shown in formula (1) 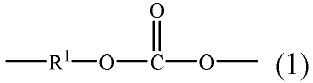 wherein at least 60 percent of the total number of R¹ groups can be aromatic, or each R¹ can contain at least one C₆₋₃₀ aromatic group. A combination of different R¹ groups can be present. The carbonate units can be derived from a dihydroxy compound such as an aromatic dihydroxy compound of formula (2) or a bisphenol of formula (3)

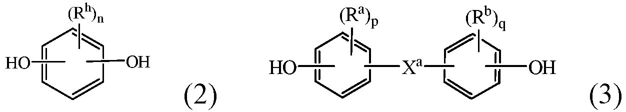

In some aspects, in formula (2), each R^{h} can be independently a halogen atom such bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n can be integers of 0 to 4. In some aspects, in formula (2), each R^{h} can be independently bromine, a C₁₋₃ alkyl, a halogen-substituted C₁₋₃ alkyl, and n can be 0 to 1.

In some aspects, in formula (3), R^{a} and R^{b} each can be independently a halogen, C₁₋₁₂ alkoxy, or C₁₋₁₂ alkyl; p and q each can be independently integers of 0 to 4, such that when p or q is less than 4, the valence of each carbon of the ring is filled by hydrogen; and X^{a} can be a single bond, -O-, -S(O)-, -S(O)₂-, -C(O)-, a C₁₋₁₁ alkylidene of formula -C(R^{c})(R^{d}) - wherein R^{c} and R^{d} each can be independently hydrogen or C₁₋₁₀ alkyl. In some aspects in formula (3), R^{a} and R^{b} each can be independently C₁₋₆ alkyl or C₁₋₃ alkoxy, and p and q each can be independently 0 to 1, and. In some particular aspects, in formula (3), p and q is each 0, or p and q is each 1; R^{a} and R^{b} are each a C₁₋₃ alkyl group, preferably methyl, disposed meta to the hydroxy group on each C₆ arylene group; and X^{a} is a bridging group connecting the two hydroxy-substituted aromatic groups, where the bridging group and the hydroxy substituent of each C₆ arylene group are disposed para to each other on the C₆ arylene group, where X^{a} can be a substituted or unsubstituted C₃₋₁₈ cycloalkylidene; a C₁₋₂₅ alkylidene of the formula -C(R^{c})(R^{d}) - wherein R^{c} and R^{d} each can be independently hydrogen, C₁₋₁₂ alkyl, C₁₋₁₂ cycloalkyl, C₇₋₁₂ arylalkylene, C₁₋₁₂ heteroalkyl, or cyclic C₇₋₁₂ heteroarylalkylene, or a group of the formula - C(=R^{e})- wherein R^{e} is a divalent C₁₋₁₂ hydrocarbon group.

Examples of aromatic dihydroxy compound of formula (2) can include but are not limited to resorcinol; substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; or substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like. In some aspects, a combination including different aromatic dihydroxy compounds can be used.

Examples of bisphenols of formula (3) can include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 2,7-dihydroxycarbazole, or the like. In some aspects, a combination including different bisphenols can be used.

In some aspects, the compound of formula (2) or formula (3) can include resorcinol, 2,2-bis(4-hydroxyphenyl) propane (bisphenol A or BPA), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl) cyclohexane, or 1,1-bis(4-hydroxyphenyl)-3,3,5-trimethylcyclohexane (TMC bisphenol).

In some aspects, the carbonate units can have the formula of formula (1a)

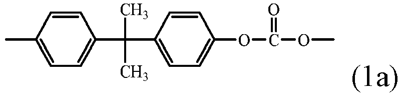

A combination of polycarbonates can be used. **In** some aspects, the polycarbonate can be a low molecular weight polycarbonate, or a high molecular weight polycarbonate, or the thermoplastic composition can contain a combination of the low molecular weight and the high molecular weight polycarbonate, preferably the polycarbonate can be the low molecular weight polycarbonate.

In some aspects, the low molecular weight polycarbonate can contain carbonate units derived from bisphenol A. In some aspects, the low molecular weight polycarbonate can be a homopolymer containing repeating carbonate units derived from bisphenol A. The low molecular weight polycarbonate can have a weight average molecular weight of 25,000 Da or less, or 15,000 Da to 25,000 Da or 20,000 Da to 25,000 Da, as measured by gel permeation chromatography using a crosslinked styrene-divinyl benzene column, at a sample concentration of 1 milligram per milliliter, and as calibrated with bisphenol A polycarbonate standards. In some aspects, the high molecular weight polycarbonate can contain carbonate units derived from bisphenol A. In some aspects, the high molecular weight polycarbonate can be a homopolymer containing repeating carbonate units derived from bisphenol A. The high molecular weight polycarbonate can have weight average molecular weight higher than 25,000 Da, or higher than 25,000 Da to 50,000 Da, or higher than 25,000 Da to 35,000 Da, or higher than 27,000 Da to 33,000 Da, as measured by gel permeation chromatography using a crosslinked styrene-divinyl benzene column, at a sample concentration of 1 milligram per milliliter, and as calibrated with bisphenol A polycarbonate standards. Linear homopolymers containing bisphenol A carbonate units (BPAPC) include those commercially available under the trade name LEXAN from SABIC; or a branched, cyanophenol end-capped bisphenol A homopolycarbonate produced via interfacial polymerization, containing 3 mol% 1,1,1-tris(4-hydroxyphenyl)ethane (THPE) branching agent, commercially available under the trade name LEXAN CFR from SABIC.

### 2. The poly(carbonate-siloxane) copolymers

The poly(carbonate-siloxane) copolymer can contain repeating carbonate units and repeating siloxane units. The poly(carbonate-siloxane) copolymer can contain carbonate units of formula (1). The carbonate units can be derived from a dihydroxy compound such as an aromatic dihydroxy compound of formula (2) or a bisphenol of formula (3).

In some aspects, poly(carbonate-siloxane) copolymer can contain carbonate units derived from resorcinol, 2,2-bis(4-hydroxyphenyl) propane (bisphenol A or BPA), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl) cyclohexane, or 1,1-bis(4-hydroxyphenyl)-3,3,5-trimethylcyclohexane (TMC bisphenol). In some particular aspects, the poly(carbonate-siloxane) copolymer can contain repeating carbonate units of formula (1a)

The siloxane units (also referred to as polysiloxane blocks) are optionally of formula (4) 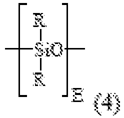 wherein each R can be independently a C₁₋₁₃ monovalent organic group. For example, each R can be independently a C₁₋₁₃ alkyl, C-C₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylarylenoxy. The foregoing groups can be fully or partially halogenated with one or more of fluorine, chlorine, bromine, or iodine. In some aspects, where a transparent poly(carbonate-siloxane) copolymer is desired, R can be unsubstituted by a halogen. In some aspects, a combination of the foregoing R groups can be used in the same poly(carbonate-siloxane) copolymer.

In some aspects, each R can be independently a C₁₋₃ alkyl, C₁₋₃ alkoxy, C₃₋₆ cycloalkyl, C₃₋₆ cycloalkoxy, C₆₋₁₄ aryl, C₆₋₁₀ aryloxy, C₇ arylalkylene, C₇ arylalkylenoxy, C₇ alkylarylene, or C₇ alkylarylenoxy. In some aspects, each R can be independently methyl, trifluoromethyl, or phenyl.

The value of E in formula (4) can vary widely depending on the type and relative amount of each component in the polycarbonate composition, the desired properties of the composition, and like considerations. Generally, E has an average value of 10 to 100, preferably 20 to 60, more preferably 30 to 50.

In some aspects, the siloxane units are of formula (5) 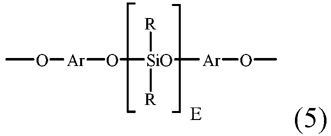 wherein E is as defined for formula (4); each R can be the same or different, and is as defined for formula (4); and each Ar can be the same or different, and can be independently a substituted or unsubstituted C₆-C₃₀ arylene, wherein the bonds can be directly connected to an aromatic moiety. Ar groups in formula (5) independently can be derived from a C₆-C₃₀ dihydroxyarylene compound, for example a dihydroxy compound of formula (2) or formula (3). Exemplary dihydroxyarylene compounds can be 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), or 1,1-bis(4-hydroxy-t-butylphenyl) propane.

Specific examples of siloxane units of formula (5) include those of the formulas (6a) and (6b) 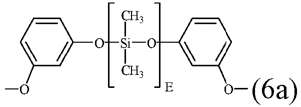 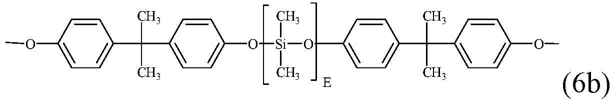 wherein E is as described in Formula (4). In some aspects, E can have an average value of 10 to 80 or 10 to 40. In some aspects, E can have an average value of 40 to 80, or 40 to 70.

In some aspects, the siloxane units can be of formula (7) 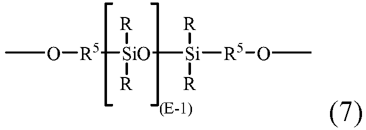 wherein R and E are as described for formula (4), and each R⁵ can be independently a divalent C₁₋₃₀ hydrocarbylene group, and wherein the polymerized polysiloxane unit is the reaction residue of its corresponding dihydroxy compound.

In some particular aspects, the siloxane units can be polydiorganosiloxane blocks of formula (8): 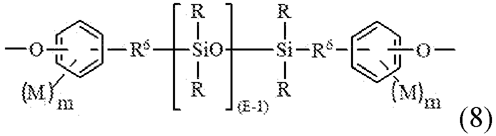 wherein R and E are as defined for formula (4). Each R⁶ in formula (8) can be the same or different, and can be independently a divalent C₂₋₈ aliphatic group. Each M in formula (8) can be the same or different, and can be independently a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, C₇₋₁₂ arylalkylenoxy, C₇₋₁₂ alkylarylene, or C₇₋₁₂ alkylarylenoxy. Each m can independently be 0, 1, 2, 3, or 4.

In some aspects, in formula (8), M can be a halogen such as bromo or chloro, an alkyl such as methyl, ethyl, or propyl, an alkoxy such as methoxy, ethoxy, or propoxy, or an aryl such as phenyl, chlorophenyl, or tolyl; R⁶ can be a dimethylene, trimethylene or tetramethylene; and R can be a C₁₋₈ alkyl haloalkyl such as trifluoropropyl, cyanoalkyl, or aryl such as phenyl, chlorophenyl or tolyl.

In some aspects, in formula (8), R can be methyl, or a combination of methyl and trifluoropropyl, or a combination of methyl and phenyl. In some aspects, in formula (8), R is methyl, M is methoxy, m is one, and R⁶ is a divalent C₁₋₃ aliphatic group. Preferred polydiorganosiloxane blocks are of the formulas 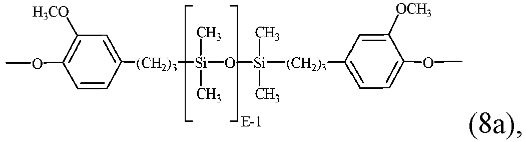 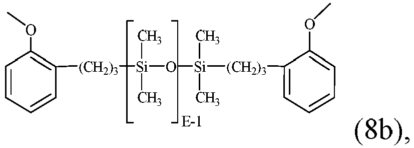 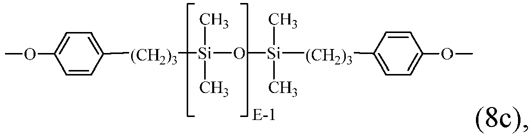 or a combination thereof, wherein E has an average value of 10 to 100, preferably 20 to 60, more preferably 30 to 50, or 40 to 50.

Suitable siloxane units have been described, for example, in WO 2008/042500 A1, WO 2010/076680 A1, and WO 2016/174592 A1, each of which are incorporated into the present application by reference.

The poly(carbonate-siloxane) copolymer can be manufactured using one or more of the tube reactor processes described in U.S. Patent Application Publication No. 2004/003914S, or the process described in U.S. Patent No. 6,723,864, or the process described in U.S. Patent No. 8,466,249, each of which are incorporated into the present application by reference.

In some aspects, the poly(carbonate-siloxane) copolymers can contain repeating carbonate units derived from bisphenol A, and repeating siloxane units (6a), (6b), (8a), (8b ), (8c), or a combination comprising at least one of the foregoing (specifically of formula 8a), wherein E has an average value of 10 to 100, or 20 to 60, or 30 to 60, or 40 to 60.

The poly(carbonate-siloxane) copolymer can have a siloxane content of 15 to 25 wt. %, preferably 18 to 22 wt. %, more preferably about 20 wt. % or at least any one of, equal to any one of, or between any two of 15, 16, 17, 18, 19, 20, 21, 22, 23, 24, and 25 wt. %. In some aspects, the poly(carbonate-siloxane) copolymer can have a weight average molecular weight (Mw) of 25,000 to 50,000 Da, or 18,000 to 35,000 Da, as measured by gel permeation chromatography using a crosslinked styrene-divinyl benzene column, at a sample concentration of 1 milligram per milliliter, and as calibrated with bisphenol A polycarbonate standards. Non-limiting examples of commercially available poly(carbonate-siloxane) copolymers which can be used include LEXAN^{™} EXL available from SABIC.

### 3. Polyphthalyl carbonate (PPC) copolymer

The PPC copolymer can contain repeating carbonate units and repeating arylate ester units. The PPC copolymer can contain carbonate units of formula (1). The carbonate units can be derived from a dihydroxy compound such as an aromatic dihydroxy compound of formula (2) or a bisphenol of formula (3).

The PPC copolymer can contain arylate ester units of formula (9). 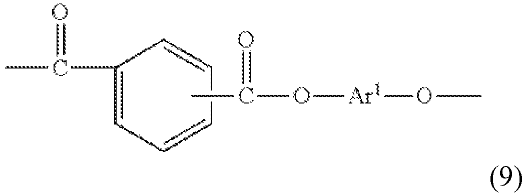 wherein Ar¹ is a C₆₋₃₂ hydrocarbyl group containing at least one aromatic group, e.g., a phenyl, naphthalene, anthracene, or the like. In an embodiment, Ar¹ is derived from an aromatic bisphenol (3), a monoaryl dihydroxy compound (2), or a combination comprising different bisphenol or monoaryl dihydroxy compounds. Thus, arylate ester units (9) can be derived by reaction of isophthalic acid, terephthalic acid, or a combination thereof (referred to herein as a "phthalic acid"), with an aromatic bisphenol (3), a monoaryl dihydroxy compound (2), or a combination thereof. The molar ratio of isophthalate to terephthalate can be 1:99 to 99:1, or 80:20 to 20:80, or 60:40 to 40:60.

In some aspects, the PPC copolymer containing carbonate units derived from (3) and arylate ester units (9) can be alternating or block copolymers of formula (10) 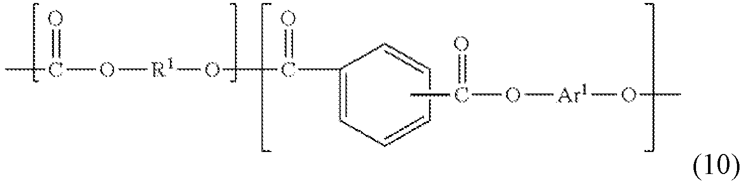 wherein R¹ and Ar¹ are as defined in formula (1) and (9), respectively.

In general, the PPC copolymers are block copolymers containing carbonate blocks and ester blocks. The weight ratio of total ester units to total carbonate units in the copolymers can vary broadly, for example from 99:1 to 1:99, or from 95:5 to 5:95, specifically from 90:10 to 10:90, or more specifically from 90:10 to 50:50, depending on the desired properties of the polycarbonate composition. The molar ratio of isophthalate to terephthalate in the ester units of the copolymers can also vary broadly, for example from 0:100 to 100:0, or from 92:8 to 8:92, more specifically from 98:2 to 45:55, depending on the desired properties of the thermoplastic composition. For example, the weight ratio of total ester units to total carbonate can be 99:1 to 40:60, or 90:10 to 50:40, wherein the molar ratio of isophthalate to terephthalate is from 99:1 to 40:50, more specifically 98:2 to 45:55, depending on the desired properties of the polycarbonate composition.

Additional carbonate units derived from the dihydroxy compound used to form the arylate ester units (9) can also be present as described above, for example in amounts of less than 20 mole %, less than 10 mole %, or less than 5 mole %, based on the total moles of units in the polycarbonate copolymer. It is also possible to have additional arylate ester units present derived from reaction of the phthalic acid with the dihydroxy compound used to form the carbonate units, for example in amounts of less than 20 mole %, less than 10 mole %, less than 5 mole %, or less than 1 mole % based on the total moles of units in the copolymer. In an embodiment, the combination of such additional carbonate units and such additional arylate ester units are present in an amount of less than 20 mole %, less than 10 mole %, less than 5 mole %, or less than 1 mole % based on the total moles of units in the copolymer.

In one aspect, the PPC copolymer can be a poly(carbonate)-co-(bisphenol arylate ester) containing of carbonate units (1), specifically carbonate units derived from (3), even more specifically bisphenol A carbonate units (1a) and repeating bisphenol arylate ester units. Bisphenol arylate units can contain residues of phthalic acid and a bisphenol, for example a bisphenol (3). In an embodiment the bisphenol arylate ester units are of formula (9a), wherein R^{a} and R^{b} are as defined above.

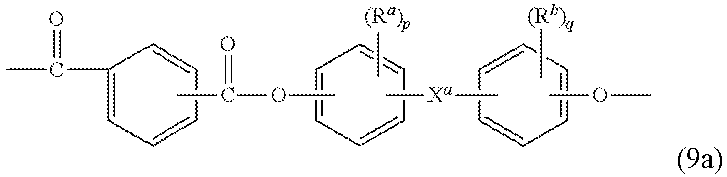

In some particular aspects, the PPC copolymer is a poly(bisphenol A carbonate)-co-(bisphenol A-phthalate-ester) of formula (10a) 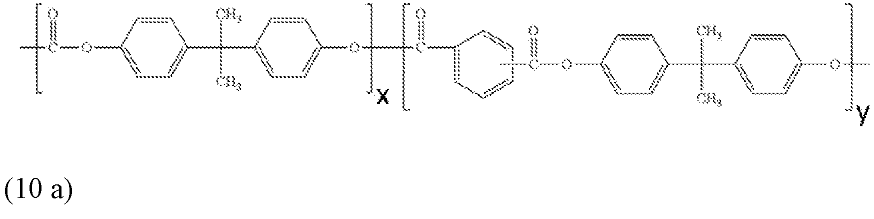 wherein y and x represent the weight percent of arylate-bisphenol A ester units and bisphenol A carbonate units, respectively. Generally, the units are present as blocks. In an embodiment, the weight percent of ester units y to carbonate units x in the copolymers is 50:50 to 99:1, or 55:45 to 90:10, or 75:25 to 95:5, or 60:40 to 80:10. The ester units can contain isophthalate and terephthalate. In some aspects, the weight percent of ester units y to carbonate units x in the copolymers is 55:45 to 90:10 and the ester units have a molar ratio of isophthalate to terephthalate from 98:2 to 88:12.

In a preferred aspect, the PPC copolymer can be copolymers of formula (10a) containing 5 to 35 wt. % or at least any one of, equal to any one of, or between any two of 5, 10, 15, 20, 25, 30, and 35 wt. % of carbonate units and 65 to 95 wt. % or at least any one of, equal to any one of, or between any two of 65, 70, 75, 80, 85, 90, and 95 wt. % of ester units, and wherein the ester units have a molar ratio of isophthalate to terephthalate of 99:1 to 88:12 or at least any one of, equal to any one of, or between any two of 99:1, 98:2, 97:3, 96:4, 95:5, 94:6, 93:7, 92:8, 91:9, 90:10, 89:11 and 88:12.

The PPC copolymer, such as poly(bisphenol A carbonate)-co-(bisphenol A-phthalate-ester) of formula (10a) can have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, and as calibrated with bisphenol A homopolycarbonate standards. Samples are eluted at a flow rate of 1.0 ml/min with methylene chloride as the eluent.

Carbonates containing polymers can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt. %.

### 4. Epoxy hydrostabilizer

The epoxy hydrostabilizer can contain an epoxy oligomer. The epoxy oligomer can have a Mw of 2,500 to 8,500 g/mol, or 3,000 to 6,000 g/mol. The epoxy oligomer can have an epoxy equivalent weight (EEW) of 180 to 2800 g/mol, or 190 to 1400 g/mol, or 200 to 700 g/mol. In an aspect, the epoxy oligomer can comprise styrenic and acrylic groups, for example as described in US 2013/0131255 and US 6,984,694 and commercially available under the trade names JONCRYL (e.g., JONCRYL ADR 4368 (a styrene-acrylate copolymer with epoxy functionality). Other epoxy oligomer include JONCRYL ADR 4300 (epoxidized soybean oil).

### 5. Additional additives

Additional additives can be used in the compositions of the present invention. Non-limiting examples of such additives can include, but are not limited to, plasticizers, lubricants, mold release agents, antioxidants, flame retardants, anti-drip agents, UV absorbers, etc.

With respect to plasticizers, lubricants, and/or mold release agents, in which there can be overlap, such additives can include, but are not limited to, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; polyalphaolefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like, phosphates such as Bisphenol A bis(diphenyl phosphate) (BPADP), and resorcinol bis (diphenyl phosphate) (RDP). In some aspects, the mold release can be pentaerythritol tetrastearate, polyalphaolefins or a combination thereof, preferably polyalphaolefins. The polyalphaolefins can be poly(1-C₂₋₁₅-ene). In some particular aspects, the polyalphaolefins can be poly(1-decene). In some particular aspects, the thermoplastic composition can contain poly(1-decene).

Non-limiting examples of antioxidants can include sterically hindered phenolic compounds, aromatic amines, a phosphite compound, carbon black and the like. Non-limiting examples of the anti-oxidant phosphite compound include organophosphites such as tris(nonyl phenyl)phosphite, tris(2,4-di-t- butylphenyl)phosphite, bis(2,4-di-t-butylphenyl)pentaerythritol diphosphite, distearyl pentaerythritol diphosphate or any combinations thereof. Non-limiting examples of phenolic antioxidants include 2,6-di-*tert*-butyl-4-methylphenol (CAS No. 128-37-0), pentaerythritol-tetrakis(3-(3,5-di-*tert*-butyl-4-hydroxyphenyl)propionate (CAS No. 6683-19-8), octadecyl 3-(3',5'-di-*tert*-butyl-4-hydroxyphenyl)propionate (CAS No. 2082-79-3), 1,3,5-trimethyl-2,4,6-tris-(3,5-di-*tert*-butyl-4-hydroxybenzyl)benzene (CAS No. 1709-70-2), 2,2'-thiodiethylenebis(3,5-di-*tert*-butyl-4-hydroxyphenyl)propionate (CAS No. 41484-35-9), calcium bis(ethyl 3,5-di-*tert*-butyl-4-hydroxybenzylphosphonate) (CAS No. 65140-91-2), 1,3,5-tris(3',5'-di-*tert*-butyl-4'-hydroxybenzyl)-isocyanurate (CAS No. 27676-62-6), 1,3,5-tris(4-*tert*-butyl-3-hydroxy-2,6-dimethylbenzyl)-1,3,5-triazine-2,4,6 -(1H,3H,5H)-trione (CAS No. 40601-76-1), 3,3-bis(3-*tert*-butyl-4-hydroxyphenyl)ethylene butyrate (CAS No. 32509-66-3), 4,4'-thiobis(2-*tert*-butyl-5-methylphenol) (CAS No. 96-69-5), 2,2'-methylene-bis-(6-(1-methyl-cyclohexyl)-para-cresol) (CAS No. 77-62-3), 3,3'-bis(3,5-di-*tert*-butyl-4-hydroxyphenyl)-N,N'-hexamethylenedipropio namide (CAS No. 23128-74-7), 2,5,7,8-tetramethyl-2-(4',8',12'-trimethyltridecyl)-chroman-6-ol (CAS No. 10191-41-0), 2,2-ethylidenebis(4,6-di-*tert*-butylphenol) (CAS No. 35958-30-6), 1,1,3-tris(2-methyl-4-hydroxy-5'-*tert*-butylphenyl)butane (CAS No. 1843-03-4), 3,9-bis(1,1-dimethyl-2-(beta-(3-*tert*-butyl-4-hydroxy-5-methylphenyl)pro pionyloxy)ethyl)-2,4,8,10-tetraoxaspiro[5.5]undecane (CAS No. 90498-90-1;), 1,6-hexanediyl-bis(3,5-bis(1,1-dimethylethyl)-4-hydroxybenzene)propan oate) (CAS No. 35074-77-2), 2,6-di-*tert*-butyl-4-nonylphenol (CAS No. 4306-88-1), 4,4'-butylidenebis(6-*tert*-butyl-3-methylphenol (CAS No. 85-60-9); 2,2'-methylene bis(6-*tert*-butyl-4-methylphenol) (CAS No. 119-47-1), triethylenglycol-bis-(3-tert-butyl-4-hydroxy-5-methylphenyl)propionate (CAS No. 36443-68-2), a mixture of C₁₃ to C₁₅ linear and branched alkyl esters of 3-(3',5'-di-*tert*-butyl-4'-hydroxyphenyl)propionic acid (CAS No. 171090-93-0), 2,2'-thiobis(6-*tert*-butyl-para-cresol) (CAS No. 90-66-4), diethyl-(3,5-di-tert-butyl-4-hydroxybenzyl)phosphate (CAS No. 976-56-7), 4,6-bis (octylthiomethyl)-*ortho*-cresol (CAS No. 110553-27-0), benzenepropanoic acid, octyl 3-(3,5-di-tert-butyl-4-hydroxyphenyl)propanoate (CAS No. 125643-61-0), 1,1,3-tris[2-methyl-4-[3-(3,5-di-tert-butyl-4-hydroxyphenyl)propionyloxy ]-5-*tert*-butylphenyl]butane (CAS No. 180002-86-2), mixed styrenated phenols (CAS No. 61788-44-1), butylated, octylated phenols (CAS No. 68610-06-0), butylated reaction product of p-cresol and dicyclopentadiene (CAS No. 68610-51-5) or any combinations thereof. In some aspects, the thermoplastic composition can contain a phosphite containing antioxidant such as tris(2,4-di-t- butylphenyl)phosphite.

Non-limiting examples of flame retardant can include sulfonate containing flame retardants, organophosphorus flame retardants and the like. In some aspects, thermoplastic composition can contain an sulfonate containing flame retardant. The sulfonate containing flame retardant can contain aromatic sulfonate. In some aspects, the sulfonate containing flame retardant can be a non-halogen aromatic sulfonate. In some aspects, the non-halogen aromatic sulfonate can be potassium diphenylsulfone sulfonate (KSS). Exemplary organophosphorus flame retardants include, but are not limited to, diphenyl pentaerythritol diphosphate, phenyl bis(dodecyl)phosphate, phenyl bis(neopentyl)phosphate, phenyl bis(3,5,5'-trimethylhexyl)phosphate, ethyl diphenyl phosphate, 2-ethylhexyl di(p-tolyl)phosphate, bis(2-ethylhexyl)p-tolyl phosphate, tritolyl phosphate, bis(2-ethylhexyl)phenyl phosphate, tri(nonylphenyl)phosphate, bis(dodecyl)p-tolyl phosphate, dibutyl phenyl phosphate, p-tolyl bis(2,5,5'-trimethylhexyl)phosphate, 2-ethylhexyl diphenyl phosphate, triphenyl phosphate, tricresyl phosphate, isopropylated triphenyl phosphate, tris-isobutylated triphenyl phosphate, phosphate ester flame retardants such as oligomeric phosphate ester containing flame retardant (e.g. Fyroflex^{™} Sol-DP available from ICL-IP, Inc., Ardsley, N.Y.), In some particular aspects, the thermoplastic composition can contain potassium diphenylsulfone sulfonate (KSS). The anti-drip can contain a fibril forming fluoropolymer, such as polytetrafluoroethylene (PTFE). The PTFE can be encapsulated by a rigid copolymer, e.g. styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can contain 35 to 65 wt. % or 50 wt. % of PTFE and 35 to 65 wt. % or 50 wt. % of SAN, based on the total weight of the encapsulated fluoropolymer. The SAN can contain 60 wt. % to 90 wt. % or 75 wt. % of styrene and 10 wt. % to 40 wt. % or 25 wt. % of acrylonitrile. Alternatively, the fluoropolymer such as PTFE can be pre-blended with a second polymer, such as for example, an aromatic polycarbonate or SAN to form an agglomerated material for use as an anti-drip. In some particular aspects, the anti-drip can be TSAN.

Exemplary UV absorber suitable for use in aspects of the disclosure include, but are not limited to, hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, 2-(2-hydroxy-3,5-di-cumyl)benzotriazole and 2-(2H-benzotriazol-2-yl)-4-(1,1,3,3-tetramethylbutyl)-phenol, commercially available under the trade name CYASORB 5411 from Cytec) or combinations comprising at least one of the foregoing UV absorber. In some aspects, the thermoplastic composition can contain a benzotriazole derivative containing UV-absorber such as hydroxybenzotriazoles e.g. 2-(2-hydroxy-3,5-di-cumyl)benzotriazole. In some aspects, the thermoplastic composition can contain 2-(2-hydroxy-3,5-di-cumyl)benzotriazole.

### B. Methods for Making the Thermoplastic compositions

The thermoplastic compositions of the present invention can be made by various methods known in the art such as extrusion, injection molding or like. For example the components, such as one or any foregoing components described herein, can be mixed together and then melt-blended to form the thermoplastic composition. The melt blending of the components can include use of shear force, extensional force, compressive force, ultrasonic energy, electromagnetic energy, thermal energy or combinations comprising at least one of the foregoing forces or forms of energy.

In some aspects, the one or any foregoing components described herein may be first dry blended with each other, or dry blended with any combination of foregoing components, then fed into an extruder from one or multi-feeders, or separately fed into an extruder from one or multi-feeders. In some aspects, the filler can be first processed into a masterbatch, then fed into an extruder. The components may be fed into the extruder from a throat hopper or any side feeders. The extruders used in the invention may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations comprising at least one of the foregoing. The extruder can generally be operated at a temperature higher than that necessary to cause the composition to melt and flow. In some aspects, the temperature of the melt in the extruder barrel can be maintained as low as possible in order to avoid excessive thermal degradation of the components. The melted composition exits extruder through small exit holes in a die. The extrudate can be quenched in a water bath and pelletized. The pellets so prepared can be of any desired length (e.g., one-fourth inch long or less). Such pellets can be used for subsequent molding, shaping, or forming. Mixtures including any combination of the foregoing mentioned components may be subjected to multiple blending and forming steps if desirable. For example, the composition may first be extruded and formed into pellets. The pellets may then be fed into a molding machine where it may be formed into any desirable shape or product. In some aspects, the flame-retardant composition emanating from a single melt blender may be formed into sheets or strands and subjected to post-extrusion processes such as annealing, uniaxial or biaxial orientation.

### C. Articles of Manufacture

The thermoplastic composition of the present invention can be comprised in an article of manufacture. Aspects of the disclosure also relate to articles including the thermoplastic composition described herein. In some aspects the article is a film, a sheet, a molded article, a welded article, a filament or a powder. In one example, the composition is incorporated into a film. Specifically, the film may include at least one film layer that includes the thermoplastic composition. The article can be shaped, formed, casted, or molded article. The article can be a molded article (e.g. injection molding, extrusion, rotational molding, or blow molding), a thermoformed article, an extruded film, an extruded sheet, a honeycomb structure, one or more layers of a multi-layer.

In some aspects, the article can be a consumer product. In some aspect, the article can be an energy convertor part and/or accessories, invertor part and/or accessories, automobile part and/or accessories, a solar apparatus, an electrical junction box, an electrical connector, an electrical vehicle charger, an outdoor electrical enclosure, a smart meter enclosure, a smart grid power node, PV (photovoltaic) frame, or miniature circuit breaker (MCB) applications.

In the context of the present invention, at least the following 19 aspects are described.

Aspect 1 is directed to a thermoplastic composition containing a polycarbonate; a polyphthalyl carbonate (PPC) copolymer; a poly(carbonate-siloxane) copolymer; and an epoxy hydrostabilizer. Aspect 2 is directed to a thermoplastic composition of aspect 1, further containing a mold release agent. Aspect 3 is directed to a thermoplastic composition of aspect 2, wherein the mold release agent contains pentaerythritol tetrastearate or a polyalphaolefin, or a combination thereof, preferably polyalphaolefin. Aspect 4 is directed to a thermoplastic composition of aspect 3, wherein the polyalphaolefin is poly(1-decene). Aspect 5 is directed to a thermoplastic composition of any one of aspects 1 to 4, wherein an Izod bar containing the composition can have a weight average molecular weight (Mw) retention of at least 75 % or at least 80 % or at least 81 %, such as 81 % to 91 % when aged in a hydrolytic aging chamber for 2000 hours at temperature of about 85 °C with a relative humidity of about 85%, and/or of at least 60 % or at least 65 % or at least 68 %, such as 68 % to 75 % when aged in a hydrolytic aging chamber for 3000 hours at temperature of about 85 °C with a relative humidity of about 85%, when compared to a Izod bar containing same composition that has not been hydrolytically aged. Aspect 6 is directed to a thermoplastic composition of any one of aspects 1 to 5, wherein the poly(carbonate-siloxane) copolymer has a siloxane content of 15 wt. % to 25 wt.%, preferably about 20 wt.%. based on the total weight of the poly(carbonate-siloxane) copolymer, and wherein the composition contains a total siloxane content of 3 wt. % to 8 wt. %. Aspect 7 is directed to a thermoplastic composition of any one of aspects 1 to 6, wherein the thermoplastic composition contains 30 wt. % to 75 wt. % of the polycarbonate, 5 wt. % to 35 wt. % of the PPC copolymer, 15 wt. % to 30 wt. % of the poly(carbonate-siloxane) copolymer, 0.05 wt. % to 1 wt. % of the epoxy hydrostabilizer and 0.05 wt. % to 1 wt. % of the mold release agent. Aspect 8 is directed to a thermoplastic composition of any one of aspects 1 to 7, wherein the polycarbonate is a low molecular weight polycarbonate having a weight average molecular (Mw) of less than 25,000 Da; or a high molecular weight polycarbonate having Mw of than 25,000 Da or higher, and wherein the composition comprises at least one of or both of the low molecular weight and the high molecular weight polycarbonate. Aspect 9 is directed to a thermoplastic composition of aspect 8, wherein the low molecular weight polycarbonate is a homopolymer containing repeating carbonate units derived from bisphenol A and has a weight average molecular weight of 20,000 Da to 25,000 Da. Aspect 10 is directed to a thermoplastic composition of any one of aspects 8 to 9, wherein the thermoplastic composition contains 30 wt. % to 75 wt. % of the low molecular weight polycarbonate and 0 wt. % to 40 wt. % of the high molecular weight polycarbonate, wherein the total wt. % of the low molecular weight and the high molecular weight polycarbonate in the composition is 30 wt. % to 75 wt. %. Aspect 11 is directed to a thermoplastic composition of any one of aspects 1 to 10, wherein the PPC copolymer is a poly(bisphenol A carbonate)-co-(bisphenol A-phthalate-ester). Aspect 12 is directed to a thermoplastic composition of any one of aspects 1 to 11, wherein the epoxy hydrostabilizer comprises a styrene-acrylate-epoxy oligomer. Aspect 13 is directed to a thermoplastic composition of any one of aspects 1 to 12, further containing an antioxidant, an UV-absorber, an anti-drip, a flame retardant, or any combination thereof. Aspect 14 is directed to a thermoplastic composition of any one of aspects 1 to 13, having one of, a combination of, or all of the following properties: a notched Izod impact strength greater than i) 500 J/m, preferably 500 to 1200 J/m, at - 30 °C and/or ii) greater than 300 J/m, preferably 300 to 1000 J/m, at - 40 °C as measured in accordance with ASTM D256; a heat deflection temperature (HDT) at 1.82 MPa, 3.2 mm of 121 °C to 131 °C as measured in accordance with ASTM D648; a UL94 rating of V0 at a thickness of 1.5 mm; a tensile strength at break greater than 50 MPa, preferably 52 MPa to 70 MPa at 23 °C, 50 mm/s as measured in accordance with ASTM D638; and/or a tensile modulus greater than 2000 MPa, preferably 2010 MPa to 2500 MPa at 23 °C, 50 mm/s as measured in accordance with ASTM D638. Aspect 15 is directed to a thermoplastic composition of any one of aspects 1 to 14, wherein an Izod bar containing the composition can have a weight average molecular weight (Mw) retention of at least 75 % or at least 80 % or at least 81 %, such as 81 % to 91 % when aged in a hydrolytic aging chamber for 2000 hours at temperature of about 85 °C with a relative humidity of about 85%, and wherein the composition have a notched Izod impact strength greater than 500 J/m, at - 30 °C, 3.2 mm and a heat deflection temperature (HDT) at 1.82 MPa, 3.2 mm of 121 °C to 131 °C as measured in accordance with ASTM D648. Aspect 16 is directed to a thermoplastic composition of any one of aspects 1 to 15, wherein the composition is an extruded, a blow-molded, or an injection-molded thermoplastic composition. Aspect 17 is directed to a thermoplastic composition of any one of aspects 1 to 16, wherein the composition is comprised in an article of manufacture. Aspect 18 is directed to a thermoplastic composition of aspect 17, wherein the article of manufacture is an energy convertor part and/or accessories, invertor part and/or accessories, automobile part and/or accessories, solar apparatus, an electrical junction box, an electrical connector, an electrical vehicle (EV) charger, an outdoor electrical enclosure, a smart meter enclosure, a smart grid power node, PV (photovoltaic) frame and/connector part, or miniature circuit breaker (MCB) applications. Aspect 19 is directed to a thermoplastic composition of any one of aspects 17 to 18, wherein the article of manufacture is a PV frame and/or connector part or an EV charger part.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### Thermoplastic compositions

Compositions described herein included materials as set forth below in Table 1.

**Table 1: Materials**

| **Component** | **Chemical Name (Use)** | CAS # |
|---|---|---|
| PC-1 | Bisphenol A polycarbonate with PCP endcaps, Mw = 21,000 to 23,000 g/mol as per GPC using bisphenol A homopolycarbonate standards, having the tradename C017. | 111211-39-3 |
| PC-2 | Bisphenol A polycarbonate with PCP endcaps, Mw = 29,900 to 31,000 g/mol as per GPC using bisphenol A homopolycarbonate standards, having the tradename C023A. | 111211-39-3 |
| PC-Si | PC-Siloxane copolymer, PCP endcaps , 20% siloxane | 202483-49-6 |
| PPC | Poly(bisphenol A carbonate-bisphenol A phthalate) having 19-21 wt% bisphenol A carbonate units and 79-81 wt% bisphenol A phthalate groups with an isophthalate:terephthalate ratio of 93:7; Tg = 174°C; Mw = 27,000-29,000 g/mol as per GPC using bisphenol A homopolycarbonate standards, having the tradename C016. | 71519-80-7 |
| UVA234 | 2-(2-hydroxy-3,5-di-cumyl)benzotriazole | 70321-86-7 |
| PETS (F538) | pentaerythritol tetrastearate | 115-83-3 |
| KSS (F535) | potassium diphenylsulphon-3-sulphonate | 63316-43-8 |
| Irgafos 168 (F542) | Anti-oxidant agent, Tris(2,4-di-t-butylphenyl)phosphite | 31570-04-4 |
| PAO(F8580) | Polyalphaolefins | 68037-01-4 |
| Rikemal S-100A, additive (F8650) | Glyceryl monostearate | 31566-31-1 |
| CESA | ADR Joncryl 4368, Styrene-acrylate-epoxy oligomer | 01-00-2 |
| TSAN | poly(tetrafluoroethylene):styrene-acrylonitrile 50:50 | 9002-84-0 |

Compounding procedures are described as follows: The materials were pre-blended and then extruded using a twin extruder. The compositions were melt-kneaded, extruded, cooled through a water bath and were pelletized. The extrusion conditions used are listed in Table 2. The extruded pellets were molded into mechanical bars and flame bars. The pellets were dried at 120 °C for 3 hours, and the testing specimens were prepared from the dried pellets using injection molding. The injection molding conditions used are listed in Table 3.

**Table 2: Extrusion conditions**

| Parameter | Unit | Value |
|---|---|---|
| Die | mm | 3 |
| Zone 1 Temp | °C | 50 |
| Zone 2 Temp | °C | 100 |
| Zone 3-11 Temp | °C | 270 |
| Die Temp | °C | 270 |
| Screw speed | rpm | 400 |
| Throughput | kg/hr | 40 |
| Side feeder speed | rpm | 250 |

**Table 3: Injection molding parameters**

| Parameters | Unit | Tensile/HD T/Izod bar | Flame bar |
|---|---|---|---|
| Cnd: Pre-drying time | Hour | 3 | 3 |
| Cnd: Pre-drying temp | °C | 120 | 120 |
| Hopper temp | °C | 50 | 50 |
| Zone 1 temp | °C | 275 | 300 |
| Zone 2 temp | °C | 280 | 300 |
| Zone 3 temp | °C | 285 | 300 |
| Nozzle temp | °C | 280 | 300 |
| Mold temp | °C | 75 | 100 |
| Screw speed | rpm | 100 | 100 |
| Back pressure | kgf/cm² | 68 | 68 |
| Injection speed | mm/s | 30 | 30 |
| Max. injection pressure | kgf/cm² | 1200 | 1200 |
| Molding Machine | - | FANUC | Netstal |
| Mold Type | - | Axxicon | ULA-1.5mm |

Samples prepared were tested in accordance with conditions presented in Table 4. For hydrolytic stability assessment, Izod bars were put in a hydrolytic aging chamber for pre-determined time intervals at temperature of about 85 °C with a relative humidity of about 85% and then were taken out for gel permeation chromatography (GPC), tensile and Izod (notched) impact tests at 23 °C. Retention was calculated by comparing the test values with that for non-aged Izod bars.

For hydrolytic stability assessments, Izod bars were placed into a hydrolytic chamber at 85 °C and 85% relative humidity (RH) for pre-determined time intervals. The samples were then removed from the ovens for characterization of molecular weight (Mw) and impact properties. Hydrolytic stability was assessed by comparison of the weight average molecular weight of polycarbonate before and after hydrolytic stress as described above. The data was converted to % retention of the initial Mw and the data are shown in the following tables indicated as "Dual 85, Mw retention." Mw was determined by gel permeation chromatography (GPC). Hydrolytic stability was assessed by comparison of Notched Izod impact strength (NII) at 23°C of a formulation before and after hydrolytic stress. The data was converted to % retention of the initial NII and the data are shown in the following tables indicated as "Dual 85, NII (2°C) retention."

Impact properties were evaluated by Notched Izod impact testing (NII) at temperatures of 23 °C, -30 °C, and -40 °C according to ASTM D256 using bars (63.5 mm x 12.7 mm x 3.2 mm).

Melt volume rate (MVR) was determined at 300°C using a 1.2-kilogram weight, over 10 minutes, in accordance with ASTM D1238-04,

Heat deflection temperature (HDT) was determined on one-eighth inch (3.18 mm) bars per ASTM D648 at 1.82 MPa.

Flammability tests were performed on aged samples (23 °C, 48 h, then 70 °C, 168 h) at a thickness of 0.8 mm in accordance with the Underwriter's Laboratory (UL) UL 94 standard. In some cases, a second set of 5 bars was tested to give an indication of the robustness of the rating. In this report the following definitions are used as shown in Table 5. Total flame-out-times for all 5 bars (FOT = t1 + t2) were determined. V-ratings were obtained for every set of 5 bars.

**Table 4: Testing methods**

| **Property** | **Standard** | **Conditions** | **Specimen Type** |
|---|---|---|---|
| Weight average molecular weight (Mw) | SABIC | GPC | Bar-63.5mm x 12.7mm x 3.2 mm |
| Tensile | ASTM D638 | 23 °C , 3.2 mm | Bar-57.00* 13.00*3.18* 166mm |
| Heat deflection temperature (HDT) | ASTM D648 | 23 °C , 3.2 mm | Bar-127mm x 12.7mm x 3.2 mm |
| Notched Izod | ASTM D256 | 23 °C , 3.2 mm | Bar-63.5mm x 12.7mm x 3.2 mm |
| Flame retardancy | UL 94 | Vertical Burning | Bar-127 mm x 12.7 mm x 3mm/1mm |

Example compositions and their properties are shown in Tables 5, 6 and 7.

**Table 5: Varying amounts of hydro stabilizer.**

| Components | | Unit | C1 | E1 | E2 | E3 | E4 |
|---|---|---|---|---|---|---|---|
| PC-1 | | % | 38.25 | 38.18 | 38.1 | 38.15 | 38.33 |
| PC-2 | | % | 38.26 | 38.18 | 38.11 | 38.15 | 38.33 |
| PC-Si | | % | 22.2 | 22.2 | 22.2 | 22.2 | 22.2 |
| PETS | | % | 0.3 | 0.3 | 0.3 | 0.3 | 0 |
| AO168 | | % | 0.09 | 0.09 | 0.09 | 0 | 0.09 |
| KSS | | % | 0.3 | 0.3 | 0.3 | 0.3 | 0.3 |
| TSAN | | % | 0.3 | 0.3 | 0.3 | 0.3 | 0.3 |
| UVA234 | | % | 0.3 | 0.3 | 0.3 | 0.3 | 0.3 |
| CESA | | % | | 0.15 | 0.3 | 0.3 | 0.15 |

| Testing | | | | | | | |
|---|---|---|---|---|---|---|---|
| MFR | 300 °C 1.2kg | g/10min | 10.3 | 10.6 | 10.6 | 10.6 | 10.4 |
| HDT | 1.82 MPa | C | 120 | 120 | 120 | 120 | 121 |
| NII | 23°C | J/m | 911 | 906 | 894 | 882 | 869 |
| | minus 30 °C | J/m | 738 | 766 | 755 | 712 | 742 |
| | minus 40 °C | J/m | 687 | 707 | 678 | 677 | 702 |
| T.S | 50 mm/s | Mpa | 56 | 56 | 56 | 55 | 58 |
| T.M | 50 mm/s | MPa | 2074 | 2116 | 2083 | 2097 | 2076 |
| T.E | 50 mm/s | % | 91 | 83 | 91 | 69 (*U) | 95 |
| UL94 V0 | 1.5mm | | Pass | Pass | Pass | Fail | Pass |

| DH85 hydro testing (hydrolytic aging for specified intervals at temperature of about 85 °C with a relative humidity of about 85%) | | | | | | | |
|---|---|---|---|---|---|---|---|
| Mw retention | 0h | / | 100% | 100% | 100% | 100% | 100% |
| | 500h | / | 93% | 96% (*I) | 97% (*I) | 94% | 97% (*I) |
| | 1000h | / | 86% | 89% (*I) | 92% (*I) | 83% | 90% (*I) |
| | 2000h | / | 75% | 75% (*C) | 77% (*C) | 66% (*U) | 77% (*I) |
| | 3000h | / | 61% | 60% (*C) | 62% (*C) | 51% (*U) | 64% (*I) |
| NII 23°C | 0h | J/m | 911 | 906 | 894 | 882 | 869 |
| | 500h | J/m | 740 | 785 | 776 | 762 | 790 |
| | 1000h | J/m | 652 | 693 | 652 | 479 | 722 |
| | 2000h | J/m | 402 | 397 (*C) | 352 (*C) | 83 (*U) | 461 (*I) |
| | 3000h | J/m | 60 | 64 (*C) | 37 (*U) | 22 (*U) | 84 (*I) |
| T.S | 0h | MPa | 56 | 56 | 56 | 55 | 58 |
| | 500h | MPa | 61 | 62 | 62 | 61 | 61 |
| | 1000h | MPa | 63 | 63 | 63 | 63 | 62 |
| | 2000h | MPa | 66 | 66 | 66 | 66 | 65 |
| | 3000h | MPa | 68 | 65 (*C) | 51 (*C) | 24 (*U) | 66 (*C) |
| T.E(std) | 0h | / | 91 | 83 | 91 | 69 | 95 |
| | 500h | / | 32(33)% | 39(29)% | 10(4)% (*U) | 42(21) | 53(13) |
| | 1000h | / | 19(15)% | 9(7)% | 5(0.6)% | 10(6)% | 25(14)% |
| | 2000h | / | 6(2)% | 6(1)% | 4(0.3)% | 4(0.01)% | 6(2)% |
| | 3000h | / | 3.5(0.8)% | 3.9(0.4)% | 2.5(0.1)% | 1(0.2)% | 4.4(0.1)% |

| | | | | | | | |
|---|---|---|---|---|---|---|---|
| *U, *C, and *I refer unmet, comparable and improved respectively. | | | | | | | |

Composition C1 is a comparative composition. Comparison of E1 and C1 shows, addition of 0.15 wt. % of CESA moderately change melt flow rate (MFR), heat deflection temperature (HDT), notched Izod impact (NII), tensile, V0-1.5 mm, and weight average molecular weight (Mw) retention for 1000h at 85°C, 85% relative humidity (DH85). Comparison of E2 and C1 shows, addition of 0.3 wt. % of CESA further improves DH85 Mw retention. Comparison of E3 and C1 shows, AO168 improves tensile elongation and V0-1.5 mm, and also improves DH85 Mw retention, NII and tensile. Comparison of E4 and C1 shows, decreasing PETs can improve Mw retention and NII. Results presented in Table 5 show, including CESA and A0168, combined with decreasing PETS can improve hydrolytic stability.

**Table 6: Varying mold release and poly(carbonate-siloxane) copolymer type.**

| Components | | Unit | C1 | C2 | E6 | E7 |
|---|---|---|---|---|---|---|
| PC-1 | | % | 38.25 | 38.28 | 38.28 | 38.28 |
| PC-2 | | % | 38.26 | 38.28 | 38.28 | 38.28 |
| PC-Si | | % | 22.2 | 22.2 | 22.2 | 22.2 |
| PETS | | % | 0.3 | 0.15 | 0 | 0 |
| AO168 | | % | 0.09 | 0.04 | 0.04 | 0.04 |
| KSS | | % | 0.3 | 0.3 | 0.3 | 0.3 |
| TSAN | | % | 0.3 | 0.3 | 0.3 | 0.3 |
| UVA234 | | % | 0.3 | 0.3 | 0.3 | 0.3 |
| CESA | | % | | 0.15 | 0.15 | 0.15 |
| PAO | | % | | | 0.15 | |
| Rikemal S-100A | | % | | | | 0.15 |

| Testing | | | | | | |
|---|---|---|---|---|---|---|
| MFR | 300 °C, 1.2kg | g/10 min | 10.3 | 10.5 | 10.2 | 10.4 |
| HDT | 1.82 MPa | C | 120 | 121 | 121 | 121 |
| NII | 23 °C | J/m | 911 | 878 | 892 | 885 |
| | minus 30°C | J/m | 738 | 729 | 753 | 772 |
| | minus 40 °C | J/m | 687 | 698 | 723 | 746 |
| T.S | 50 mm/s | Mpa | 56 | 59 | 59 | 56 |
| T.M | 50 mm/s | MPa | 2074 | 2080 | 2086 | 2120 |
| T.E | 50 mm/s | % | 91 | 100 | 100 | 87 |
| UL94 V0 | 1.5mm | | Pass | Pass | Pass | Fail |

| DH85 hydro testing | | | | | | |
|---|---|---|---|---|---|---|
| Mw retention | 0h | / | 100% | 100% | 100% | 100% |
| | 500h | / | 93% | 94% | 96% | 93% |
| | 1000h | / | 86% | 86% | 89% | 81% |
| | 2000h | / | 75% | 72% | 76% | 66% (*U) |
| | 3000h | / | 61% | 59% (*C) | 64% (*I) | 50%(*U) |
| NII 23°C | 0h | J/m | 911 | 878 | 892 | 885 |
| | 500h | J/m | 740 | 780 | 796 | 767 |
| | 1000h | J/m | 652 | 647 | 691 | 647 |
| | 2000h | J/m | 402 | 373 (*C) | 433 (*C) | 87 |
| | 3000h | J/m | 60 | 40 (*C) | 62 (*C) | 27(*U) |
| T.S | 0h | MPa | 56 | 59 | 59 | 56 |
| | 500h | MPa | 61 | 61 | 61 | 62 |
| | 1000h | MPa | 63 | 63 | 62 | 64 |
| | 2000h | MPa | 66 | 66 | 65 | 67 |
| | 3000h | MPa | 68 | 67 (*C) | 56 (*C) | 31(*U) |
| T.E(std) | 0h | / | 91 | 100 | 100 | 87 |
| | 500h | / | 32(33)% | 24(7) | 62(25) | 31(16) |
| | 1000h | / | 19(15)% | 17(6)% | 10(3)% | 12(6)% |
| | 2000h | / | 6(2)% | 6(0.5)% | 4(0.3)% | 4(0.3)% |
| | 3000h | / | 3.5(0.8)% | 3.6(0.7)% | 3(0.6)% | 1.3(0.1)% |

| | | | | | | |
|---|---|---|---|---|---|---|
| *U, *C, and *I refer unmet, comparable and improved respectively. | | | | | | |

C1 and C2 are comparative compositions. Comparison of E6, C2 and C1 shows CESA, AO168, and PAO benefit DH85 performance in terms of Mw retention and NII. Comparison of E7, C2 and C1 shows, changing mold release type from PETS to Rikemal S-100A drops DH85 and hurts FR properties. Results presented in Table 6 show, PAO improves hydrolytic stability.

**Table 7: Varying amounts of PPC**

| Components | | Unit | C1 | C2 | E9 | E10 | E11 | E12 | E13 |
|---|---|---|---|---|---|---|---|---|---|
| PC-1 | | % | 38.2 5 | 38.28 | 66.56 | 56.56 | 46.56 | 36.56 | 26.56 |
| PC-2 | | % | 38.2 6 | 38.28 | | | | | |
| PPC | | % | 0 | 0 | 10 | 20 | 30 | 40 | 50 |
| PC-Si | | % | 22.2 | 22.2 | 22.2 | 22.2 | 22.2 | 22.2 | 22.2 |
| PETS | | % | 0.3 | 0.15 | 0.15 | 0.15 | 0.15 | 0.15 | 0.15 |
| AO168 | | % | 0.09 | 0.04 | 0.04 | 0.04 | 0.04 | 0.04 | 0.04 |
| KSS | | % | 0.3 | 0.3 | 0.3 | 0.3 | 0.3 | 0.3 | 0.3 |
| TSAN | | % | 0.3 | 0.3 | 0.3 | 0.3 | 0.3 | 0.3 | 0.3 |
| UVA234 | | % | 0.3 | 0.3 | 0.3 | 0.3 | 0.3 | 0.3 | 0.3 |
| CESA | | % | 0 | 0.15 | 0.15 | 0.15 | 0.15 | 0.15 | 0.15 |

| Testing | | | | | | | | | |
|---|---|---|---|---|---|---|---|---|---|
| MFR | 300C, 1.2kg | g/10 min | 10.3 | 10.5 | 14.6 | 10.8 | 7.9 | 6.3 | 5 |
| HDT | 1.82M Pa | C | 120 | 121 | 121 | 124 (*I) | 126 (*I) | 129 (*I) | 131 (*I) |
| NII | 23°C | J/m | 911 | 878 | 785 | 756 | 715 | 683 | 678 |
| | minus 30°C | J/m | 738 | 729 | 648 | 592 | 504 | 405 (*U) | 285 (*U) |
| | minus 40°C | J/m | 687 | 698 | 559 | 461 | 302 | 288 (*U) | 233 (*U) |
| T.S | 50 mm/s | Mpa | 56 | 59 | 59 | 56 | 60 | 59 | 59 |
| T.M | 50 mm/s | MPa | 2074 | 2080 | 2129 | 2101 | 2094 | 2083 | 2053 |
| T.E | 50 mm/s | % | 91 | 100 | 95 | 66 | 90 | 78 | 71 |
| UL94 V0 | 1.5 mm | | Pass | Pass | Margi nal | Pass | Margi nal | Margi nal | Pass |
| | 1.8 mm | | | | Pass | Pass | Pass | Pass | Pass |

| DH85 Hydro testing | | | | | | | | | |
|---|---|---|---|---|---|---|---|---|---|
| Mw retentio n | 0h | / | 100 % | 100% | 100% | 100% | 100% | 100% | 100% |
| | 500h | / | 93% | 94% | 98% | 97% | 99% | 97% | 95% |
| | 1000h | / | 86% | 86% | 91% (*I) | 91% (*I) | 92% (*I) | 92% (*I) | 90% (*I) |
| | 2000h | / | 75% | 72% | 82% (*I) | 83% (*I) | 83% (*I) | 83% (*I) | 82% (*I) |
| | 3000h | / | 61% | 59% (*C) | 69% (*I) | 71% (*I) | 70% (*I) | 67% (*I) | 65% (*I) |
| NII 23°C | 0h | J/m | 911 | 878 | 785 | 756 | 715 | 683 | 678 |
| | 500h | J/m | 740 | 780 | 631 | 604 | 617 | 586 | 555 |
| | 1000h | J/m | 652 | 647 | 582 | 550 | 550 | 553 | 542 |
| | 2000h | J/m | 402 | 373 | 358 | 370 | 384 | 349 | 396 |
| | | | | (*C) | (*C) | (*C) | (*C) | (*C) | (*C) |
| | 3000h | J/m | 60 | 40 (*C) | 53 (*C) | 50 (*C) | 44 (*C) | 64 (*C) | 60 (*C) |
| T.S | 0h | MPa | 56 | 59 | 59 | 56 | 60 | 59 | 59 |
| | 500h | MPa | 61 | 61 | 62 | 62 | 63 | 63 | 64 |
| | 1000h | MPa | 63 | 63 | 64 | 65 | 65 | 66 | 66 |
| | 2000h | MPa | 66 | 66 (*C) | 67 (*C) | 67 (*C) | 68 (*C) | 68 (*C) | 69 (*C) |
| | 3000h | MPa | 68 | 67 (*C) | 51 (*C) | 58 (*C) | 55 (*C) | 58 (*C) | 46 (*C) |
| T.E(std ) | 0h | / | 91 | 100 | 95(6) % | 67 (37) % | 90(5) % | 78(30) % | 71(33) % |
| | 500h | / | 32 (33) % | 24(7) | 18(6) % | 32 (12) % | 36(11) % | 35(20) % | 38(35) % |
| | 1000h | / | 19 (15) % | 17(6) % | 18(2) % | 21(6) % | 28(7) % | 30(14) % | 26(8) % |
| | 2000h | / | 6(2) % | 6(0.5) % | 5(1)% | 6(1) % | 7(2)% | 10(3) % | 6(2)% |
| | 3000h | / | 3.5 (0.8) % | 3.6 (0.7) % | 2.5 (0.8)% | 3(0.5) % | 2.8 (0.4)% | 3.1 (0.8)% | 2.3 (0.2) % |

| | | | | | | | | | |
|---|---|---|---|---|---|---|---|---|---|
| *U, *C, and *I refer unmet, comparable and improved respectively. | | | | | | | | | |

Comparison of E9 - E13, and C2 and C1, shows with addition of PPC from 10 wt. % to 50 wt. %, HDT is boosted gradually to as high as ~131 °C, while NII, especially under low temperature is decreased, but for E9, E10 and E11, NII greater than 500J/m and greater than 300J/m under minus 30 °C and minus 40 °C respectively can still be maintained, which can be critical for passing ball drop testing in PV connector applications. At PPC concentration 40 wt. % or higher, NII less than 500J/m and less than 300J/m under minus 30 °C and minus 40 °C respectively is obtained. In terms of Mw retention, all PPC added samples show improvement compared to C2 and C1, where E10 and E11 show good improvement. Results present in Table 7 show, 10 wt.% to 30 wt. % of PPC can significantly improve hydrolytic stability and heat resistance, while keeping acceptable low temperature and FR properties.

Method of examples described herein can be machine or computer implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, nontransitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

Although embodiments of the present application and their advantages have been described in detail, it should be understood that various changes, substitutions and alterations can be made herein without departing from the spirit and scope of the embodiments as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the above disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

## Claims

1. A thermoplastic composition comprising:
30 wt. % to 75 wt. % of a polycarbonate;
5 wt. % to 35 wt. % of a polyphthalyl carbonate (PPC) copolymer;
15 wt. % to 30 wt. % of a poly(carbonate-siloxane) copolymer;
0.05 wt. % to 1 wt. % of an epoxy hydrostabilizer; and
0.05 wt. % to 1 wt. % of a mold release agent;
wherein the thermoplastic composition has a heat deflection temperature (HDT) at 1.82 MPa, 3.2 mm of 121 °C to 131 °C as measured in accordance with ASTM D648.

2. The thermoplastic composition of claim 1, further comprising a mold release agent.

3. The thermoplastic composition of claim 2, wherein the mold release agent comprises pentaerythritol tetrastearate or a polyalphaolefin, or a combination thereof, preferably polyalphaolefin.

4. The thermoplastic composition of any one of claims 1 to 3, wherein an Izod bar containing the composition have,
a weight average molecular weight (Mw) retention of at least 75 % or at least 80 % or at least 81 % or 91% after aging the bar in a hydrolytic aging chamber for 2000 hours at temperature of about 85 °C with a relative humidity of about 85% when compared to a same composition containing Izod bar that has not been hydrolytically aged; and/or
a weight average molecular weight (Mw) retention of at least 60 % or at least 65 % or at least 68 % or 68 % to 75 %, after aging the bar in a hydrolytic aging chamber for 3000 hours at temperature of about 85 °C with a relative humidity of about 85% when compared to a same composition containing Izod bar that has not been hydrolytically aged, wherein Mw has been measured in accordance with the description.

5. The thermoplastic composition of any one of claims 1 to 4, wherein the poly(carbonate-siloxane) copolymer has a siloxane content of 15 wt. % to 25 wt.%, preferably about 20 wt.%., based on the total weight of the poly(carbonate-siloxane) copolymer, and wherein the composition comprises a total siloxane content of 3 wt. % to 8 wt. %.

6. The thermoplastic composition of any one of claims 2 to 5, comprising:
65 wt. % to 75 wt. % of the polycarbonate;
5 wt. % to 35 wt. % of the PPC copolymer;
15 wt. % to 30 wt. % of the poly(carbonate-siloxane) copolymer;
0.05 wt. % to 1 wt. % of the epoxy hydrostabilizer; and
0.05 wt. % to 0.9 wt. % of the mold release agent.

7. The thermoplastic composition of any one of claims 1 to 6, wherein:
the polycarbonate is a low molecular weight polycarbonate having a weight average molecular (Mw) of less than 25,000 Da; or
a high molecular weight polycarbonate having Mw of than 25,000 Da or higher, and
wherein the composition comprises at least one of or both of the low molecular weight and the high molecular weight polycarbonate, wherein Mw has been measured in accordance with the description.

8. The thermoplastic composition of claim 7, comprising 30 wt. % to 75 wt. % of the low molecular weight polycarbonate and 0 wt. % to 40 wt. % of the high molecular weight polycarbonate, wherein the total wt. % of the low molecular weight and the high molecular weight polycarbonate in the composition is 30 wt. % to 75 wt. %.

9. The thermoplastic composition of any one of claims 1 to 8, wherein the epoxy hydrostabilizer comprises a styrene-acrylate-epoxy oligomer.

10. The thermoplastic composition of any one of claims 1 to 9, wherein the composition comprises both of the low molecular weight and the high molecular weight polycarbonates.

11. The thermoplastic composition of any one of claims 1 to 10, having one of, a combination of, or all of the following properties:
a notched Izod impact strength greater than (i) 500 J/m, preferably 500 to 1200 J/m, at - 30 °C, and/or (ii) greater than 300 J/m, preferably 300 to 1000 J/m, at - 40 °C, as measured in accordance with ASTM D256;
a UL94 rating of V0 at a thickness of 1.5 mm;
a tensile strength at break greater than 50 MPa, preferably 52 MPa to 70 MPa at 23 °C, 50 mm/s as measured in accordance with ASTM D638; and/or
a tensile modulus greater than 2000 MPa, preferably 2010 MPa to 2500 MPa at 23 °C, 50 mm/s as measured in accordance with ASTM D638.

12. The thermoplastic composition of claim 11, wherein an Izod bar containing the composition have, a weight average molecular weight (Mw) retention of at least 75 % or at least 80 % or at least 81 % after aging the bar in a hydrolytic aging chamber for 2000 hours at temperature of about 85 °C with a relative humidity of about 85% when compared to a same composition containing Izod bar that has not been hydrolytically aged, and the compositions has a notched Izod impact strength greater than 500 J/m, at - 30 °C, 3.2 mm and a heat deflection temperature (HDT) at 1.82 MPa, 3.2 mm of 121 °C to 131 °C as measured in accordance with ASTM D648.

13. The thermoplastic composition of any one of claims 1 to 12, wherein the composition is an extruded, a blow-molded, or an injection-molded thermoplastic composition.

14. The thermoplastic composition of any one of claims 1 to 13, wherein the composition is comprised in an article of manufacture, wherein the article of manufacture is an energy convertor part and/or accessories, invertor part and/or accessories, automobile part and/or accessories, solar apparatus, an electrical junction box, an electrical connector, an electrical vehicle (EV) charger, an outdoor electrical enclosure, a smart meter enclosure, a smart grid power node, PV (photovoltaic) frame and/connector part, or miniature circuit breaker (MCB) applications.

15. The thermoplastic composition of claim 14, wherein the article of manufacture is a PV frame and/or connector part or an EV charger part.

## Patentansprüche

1. Thermoplastische Zusammensetzung, umfassend:
30 Gew.-% bis 75 Gew.-% eines Polycarbonats,
5 Gew.-% bis 35 Gew.-% eines Polyphthalylcarbonat(PPC)-Copolymers,
15 Gew.-% bis 30 Gew.-% eines Poly(carbonat-siloxan)-Copolymers,
0.05 Gew.-% bis 1 Gew.-% eines Epoxy-Hydrostabilisators und
0.05 Gew.-% bis 1 Gew.-% eines Formtrennmittels,
wobei die thermoplastische Zusammensetzung eine Wärmeformbeständigkeitstemperatur (HDT) bei 1,82 MPa, 3,2 mm von 121 °C bis 131 °C, gemessen gemäß ASTM D648, aufweist.

2. Thermoplastische Zusammensetzung gemäß Anspruch 1, die des Weiteren ein Formtrennmittel umfasst.

3. Thermoplastische Zusammensetzung gemäß Anspruch 2, wobei das Formtrennmittel Pentaerythrit-tetrastearat oder ein Polyalphaolefin oder eine Kombination hiervon, vorzugsweise ein Polyalphaolefin, umfasst.

4. Thermoplastische Zusammensetzung gemäß einem der Ansprüche 1 bis 3, wobei ein Izod-Stab, der die Zusammensetzung enthält, Folgendes aufweist:
eine Beibehaltung des gewichtsmittleren Molekulargewichts (Mw) von mindestens 75 % oder mindestens 80 % oder mindestens 81 % oder 91 % nach Alterung des Stabs in einer hydrolytischen Alterungskammer während 2000 Stunden bei einer Temperatur von etwa 85 °C mit einer relativen Luftfeuchtigkeit von etwa 85 % im Vergleich zu einem die gleiche Zusammensetzung enthaltenden Izod-Stab, der nicht hydrolytisch gealtert wurde, und/oder
eine Beibehaltung des gewichtsgemittelten Molekulargewichts (Mw) von mindestens 60 % oder mindestens 65 % oder mindestens 68 % oder 68 % bis 75 % nach Alterung des Stabs in einer hydrolytischen Alterungskammer während 3000 Stunden bei einer Temperatur von etwa 85 °C mit einer relativen Luftfeuchtigkeit von etwa 85 % im Vergleich zu einem die gleiche Zusammensetzung enthaltenden Izod-Stab, der nicht hydrolytisch gealtert wurde, wobei das Mw gemäß der Beschreibung gemessen wurde.

5. Thermoplastische Zusammensetzung gemäß einem der Ansprüche 1 bis 4, wobei das Poly(carbonat-siloxan)-Copolymer einen Siloxangehalt von 15 Gew.-% bis 25 Gew.-%, vorzugsweise etwa 20 Gew.-%, bezogen auf das Gesamtgewicht des Poly(carbonat-siloxan)-Copolymers, aufweist und wobei die Zusammensetzung einen Gesamtsiloxangehalt von 3 Gew.-% bis 8 Gew.-% umfasst.

6. Thermoplastische Zusammensetzung gemäß einem der Ansprüche 2 bis 5, umfassend:
65 Gew.-% bis 75 Gew.-% des Polycarbonats,
5 Gew.-% bis 35 Gew.-% des PPC-Copolymers,
15 Gew.-% bis 30 Gew.-% des Poly(carbonat-siloxan)-Copolymers,
0.05 Gew.-% bis 1 Gew.-% des Epoxy-Hydrostabilisators und
0.05 Gew.-% bis 0,9 Gew.-% des Formtrennmittels.

7. Thermoplastische Zusammensetzung gemäß einem der Ansprüche 1 bis 6, wobei:
das Polycarbonat ein Polycarbonat mit niederem Molekulargewicht ist, das ein gewichtsmittleres Molekulargewicht (Mw) von weniger als 25.000 Da aufweist, oder
ein Polycarbonat mit hohem Molekulargewicht ist, das ein Mw von 25.000 Da oder höher aufweist, und
wobei die Zusammensetzung mindestens eines von oder beide von dem Polycarbonat mit niedrigem Molekulargewicht und dem Polycarbonat mit hohem Molekulargewicht umfasst, wobei das Mw gemäß der Beschreibung gemessen wurde.

8. Thermoplastische Zusammensetzung gemäß Anspruch 7, die 30 Gew.-% bis 75 Gew.-% des Polycarbonats mit niedrigem Molekulargewicht und 0 Gew.-% bis 40 Gew.-% des Polycarbonats mit hohem Molekulargewicht umfasst, wobei die Summe der prozentualen Gewichtsanteile des Polycarbonats mit niedrigem Molekulargewicht und des Polycarbonats mit hohem Molekulargewicht in der Zusammensetzung 30 Gew.-% bis 75 Gew.-% beträgt.

9. Thermoplastische Zusammensetzung gemäß einem der Ansprüche 1 bis 8, wobei der Epoxy-Hydrostabilisator ein Styrol-Acrylat-Epoxy-Oligomer umfasst.

10. Thermoplastische Zusammensetzung gemäß einem der Ansprüche 1 bis 9, wobei die Zusammensetzung sowohl das ein niedriges Molekulargewicht aufweisende als auch das ein hohes Molekulargewicht aufweisende Polycarbonat umfasst.

11. Thermoplastische Zusammensetzung gemäß einem der Ansprüche 1 bis 10, die eine der folgenden Eigenschaften, eine Kombination hiervon oder alle der folgenden Eigenschaften aufweist:
eine Kerbschlagzähigkeit gemäß Izod von mehr als (i) 500 J/m, vorzugsweise 500 bis 1200 J/m, bei -30 °C und/oder von mehr als (ii) 300 J/m, vorzugsweise 300 bis 1000 J/m, bei -40 °C gemäß Messung entsprechend ASTM D256,
eine UL94-Einstufung von V0 bei einer Dicke von 1,5 mm,
eine Reißfestigkeit von mehr als 50 MPa, vorzugsweise 52 MPa bis 70 MPa, bei 23 °C, 50 mm/s gemäß Messung entsprechend ASTM D638, und/oder
einen Zugmodul von mehr als 2000 MPa, vorzugsweise 2010 MPa bis 2500 MPa, bei 23 °C, 50 mm/s gemäß Messung entsprechend ASTM D638.

12. Thermoplastische Zusammensetzung gemäß Anspruch 11, wobei ein Izod-Stab, der die Zusammensetzung enthält, eine Beibehaltung des gewichtsmittleren Molekulargewichts (Mw) von mindestens 75 % oder mindestens 80 % oder mindestens 81 % nach Alterung des Stabs in einer hydrolytischen Alterungskammer während 2.000 Stunden bei einer Temperatur von etwa 85 °C und einer relativen Luftfeuchtigkeit von etwa 85 %, verglichen mit einem Izod-Stab, der die gleiche Zusammensetzung enthält, der nicht hydrolytisch gealtert wurde, aufweist, und die Zusammensetzung eine Kerbschlagzähigkeit nach Izod von über 500 J/m bei -30 °C, 3,2 mm und eine Wärmeformbeständigkeitstemperatur (HDT) bei 1,82 MPa, 3,2 mm von 121 °C bis 131 °C, gemessen gemäß ASTM D648, aufweist.

13. Thermoplastische Zusammensetzung gemäß einem der Ansprüche 1 bis 12, wobei die Zusammensetzung eine extrudierte, blasgeformte oder spritzgegossene thermoplastische Zusammensetzung ist.

14. Thermoplastische Zusammensetzung gemäß einem der Ansprüche 1 bis 13, wobei die Zusammensetzung in einem Herstellungsgegenstand enthalten ist, wobei es sich bei dem Herstellungsgegenstand um ein Teil und/oder Zubehör eines Energieumwandlers, ein Teil und/oder Zubehör eines Inverters, ein Teil und/oder Zubehör eines Fahrzeugs, eine Solaranlage, eine elektrische Anschlussdose, einen elektrischen Steckverbinder, ein Ladegerät für Elektrofahrzeuge (EV), ein elektrisches Gehäuse für den Außenbereich, ein Gehäuse für einen intelligenten Zähler (Smart-Meter), einen Smart-Grid-Energiepunkt, einen PV-(Photovoltaik-)Rahmen und/ -Verbinderteil oder Anwendungen eines Miniatur-Leistungsschalters (MCB) handelt.

15. Thermoplastische Zusammensetzung gemäß Anspruch 14, wobei es sich bei dem Herstellungsgegenstand um einen PV-Rahmen und/oder ein Verbinderteil oder ein Ladeteil für ein Elektrofahrzeug handelt.

## Revendications

1. Composition thermoplastique comprenant :
de 30 % en poids à 75 % en poids d'un polycarbonate ;
de 5 % en poids à 35 % en poids d'un copolymère polyphthalyl carbonate (PPC) ;
de 15 % en poids à 30 % en poids d'un copolymère poly(carbonate-siloxane) ;
de 0,05 % en poids à 1 % en poids d'un hydro-stabilisant époxy ; et
de 0,05 % en poids à 1 % en poids d'un agent de démoulage;
la composition thermoplastique ayant une température de déformation à chaud (HDT) à 1,82 MPa, 3,2 mm de 121 °C à 131 °C telle que mesurée selon la norme ASTM D648.

2. Composition thermoplastique selon la revendication 1, comprenant en outre un agent de démoulage.

3. Composition thermoplastique selon la revendication 2, dans laquelle l'agent de démoulage comprend du tétrastearate de pentaérythritol ou une polyalphaoléfine, ou une combinaison de ceux-ci, de préférence une polyalphaoléfine.

4. Composition thermoplastique selon l'une quelconque des revendications 1 à 3, dans laquelle une barre Izod contenant la composition a
une rétention de masse molaire moyenne en masse (Mw) d'au moins 75 % ou d'au moins 80 % ou d'au moins 81 % ou de 91 % après vieillissement de la barre dans une chambre de vieillissement hydrolytique pendant 2 000 heures à une température d'environ 85 °C avec une humidité relative d'environ 85 %, par rapport à une barre Izod de même composition qui n'a pas été vieillie hydrolytiquement ; et/ou
une rétention de masse molaire moyenne en masse (Mw) d'au moins 60 % ou d'au moins 65 % ou d'au moins 68 % ou de 68 % à 75 %, après vieillissement de la barre dans une chambre de vieillissement hydrolytique pendant 3 000 heures à une température d'environ 85 °C avec une humidité relative d'environ 85 %, par rapport à une barre Izod de même composition qui n'a pas été vieillie hydrolytiquement, Mw ayant été mesurée conformément à la description.

5. Composition thermoplastique selon l'une quelconque des revendications 1 à 4, dans laquelle le copolymère poly(carbonate-siloxane) a une teneur en siloxane de 15 % en poids à 25 % en poids, de préférence d'environ 20 % en poids, par rapport au poids total du copolymère poly(carbonate-siloxane), et dans laquelle la composition comprend une teneur totale en siloxane de 3 % en poids % à 8 % en poids.

6. Composition thermoplastique selon l'une quelconque des revendications 2 à 5, comprenant :
de 65 % en poids à 75 % en poids du polycarbonate ;
de 5 % en poids à 35 % en poids du copolymère PPC ;
de 15 % en poids à 30 % en poids du copolymère poly(carbonate-siloxane) ;
de 0,05 % en poids à 1 % en poids de l'hydrostabilisant époxy ; et
de 0,05 % en poids à 0,9 % en poids de l'agent de démoulage.

7. Composition thermoplastique selon l'une quelconque des revendications 1 à 6, dans laquelle :
le polycarbonate est un polycarbonate de faible masse molaire ayant une masse molaire moyenne en masse (Mw) inférieure à 25 000 Da ; ou
un polycarbonate de masse molaire élevée ayant une Mw de 25 000 Da ou plus, et
dans lequel la composition comprend au moins l'un des polycarbonates de faible masse molaire et de masse molaire élevée, ou les deux, la Mw ayant été mesurée conformément à la description.

8. Composition thermoplastique selon la revendication 7, comprenant de 30 % en poids à 75 % en poids de polycarbonate de faible masse molaire et de 0 % en poids à 40 % en poids de polycarbonate de masse molaire élevée, le pourcentage total en poids de polycarbonate de faible masse molaire et de polycarbonate de masse molaire élevée dans la composition est de 30 % en poids à 75 % en poids.

9. Composition thermoplastique selon l'une quelconque des revendications 1 à 8, dans laquelle l'hydrostabilisant époxy comprend un oligomère styrène-acrylate-époxy.

10. Composition thermoplastique selon l'une quelconque des revendications 1 à 9, dans laquelle la composition comprend à la fois des polycarbonates de faible masse molaire et de masse molaire élevée.

11. Composition thermoplastique selon l'une quelconque des revendications 1 à 10, ayant l'une des propriétés suivantes, une combinaison de celle-ci, ou toutes les propriétés suivantes :
une résistance au choc Izod avec entaille supérieure à (i) 500 J/m, de préférence de 500 à 1 200 J/m, à - 30 °C, et/ou (ii) supérieure à 300 J/m, de préférence de 300 à 1 000 J/m, à - 40 °C, telle que mesurée selon la norme ASTM D256 ;
un classement UL94 de V0 à une épaisseur de 1,5 mm ;
une résistance à la traction à la rupture supérieure à 50 MPa, de préférence de 52 MPa à 70 MPa à 23 °C, 50 mm/s, telle que mesurée selon la norme ASTM D638 ; et/ou
un module de traction supérieur à 2 000 MPa, de préférence de 2 010 MPa à 2 500 MPa à 23 °C, 50 mm/s, tel que mesuré selon la norme ASTM D638.

12. Composition thermoplastique selon la revendication 11, dans laquelle une barre Izod contenant la composition a une rétention de masse molaire moyenne en masse (Mw) d'au moins 75 %, ou d'au moins 80 %, ou d'au moins 81% après vieillissement de la barre dans une chambre de vieillissement hydrolytique pendant 2 000 heures à une température d'environ 85 °C avec une humidité relative d'environ 85 %, par rapport à une barre Izod de même composition qui n'a pas été vieillie hydrolytiquement, et la composition a une résistance au choc Izod avec entaille supérieure à 500 J/m, à - 30 °C, 3,2 mm et une température de déformation à chaud (HDT) à 1,82 MPa, 3,2 mm de 121 °C à 131 °C telle que mesurée selon la norme ASTMD648.

13. Composition thermoplastique de l'une quelconque des revendications 1 à 12, dans laquelle la composition est une composition thermoplastique extrudée, moulée par soufflage ou moulée par injection.

14. Composition thermoplastique selon l'une quelconque des revendications 1 à 13, dans laquelle la composition est comprise dans un article manufacturé, l'article manufacturé étant une pièce et/ou des accessoires de convertisseur d'énergie, une pièce et/ou des accessoires d'onduleur, une pièce et/ou des accessoires d'automobile, un appareil solaire, une boîte de jonction électrique, un connecteur électrique, un chargeur de véhicule électrique (VE), une armoire électrique extérieure, une armoire de compteur intelligent, un noeud d'alimentation de réseau intelligent, une pièce de connecteur et/ou un cadre PV (photovoltaïque), ou des applications pour coupe-circuit miniature (MCB).

15. Composition thermoplastique selon la revendication 14, dans laquelle l'article manufacturé est une pièce de connecteur et/ou un cadre PV, ou une pièce de chargeur de VE.
